# EUROPÄISCHE PATENTSCHRIFT

(11) **EP 1 513 437 B1**
(45) Veröffentlichungstag und Bekanntmachung des Hinweises auf die Patenterteilung: **09.05.2007**
(21) Anmeldenummer: 02732313.8
(22) Anmeldetag: 18.06.2002
(51) Int. Cl.: A47J 37/04

(54) **ANLAGE ZUM GRILLEN VON MIT GRILLGUT BESTÜCKTEN SPIESSEN**
INSTALLATION FOR GRILLING PRODUCTS TO BE GRILLED HELD ON SPITS
INSTALLATION POUR GRILLER DES PIECES A GRILLER INSTALLEES SUR DES BROCHES

(43) Veröffentlichungstag der Anmeldung: 16.03.2005
(73) Patentinhaber: Maier, Urs, 8408 Winterthur (CH)
(72) Erfinder: Maier, Urs, 8408 Winterthur (CH)
(74) Vertreter: Schmauder, Klaus Dieter
(86) Internationale Anmeldenummer: PCT/CH2002/000331
(87) Internationale Veröffentlichungsnummer: WO 2003/105646

(56) Entgegenhaltungen:
- EP-A- 0 698 365
- FR-A- 2 324 268
- US-A- 2 142 390

## Beschreibung

### Technisches Gebiet

Die Erfindung betrifft eine Anlage zum Grillen von mit Grillgut bestückten Spiessen gemäss Oberbegriff des Anspruches 1.

### Stand der Technik

Eine Anlage der eingangs genannten Art ist beispielsweise als der EP0698365B bekannt. Die Anlage weist einen mit Hilfe eines Motors angetriebenen vertikal ausgerichteten Umlaufförderer auf, der zwei mit Abstand voneinander angeordnete, synchron umlaufende Umlauforgane enthält, die jeweils mit über die Länge verteilten senkrecht nach aussen vorstehenden Armen versehen sind. Diese enthalten jeweils zwei Rollen, von denen die eine antreibbar ist und deren Umfangsabstand kleiner ist als der Durchmesser des zwischen den Rollen aufzulegenden Spiesses. Im oberen Umlenkbereich sind jedem Umlauforgan Führungsorgane zugeordnet, welche die Übergabe jedes Spiesses von einem Arm auf den vorderen unterstützen. Eine Aufgabestation ist im Aufwärtstrum des Umlauforganes angeordnet und eine Heizwand im Abwärtstrum. Im unteren Umlenkbereich des Umlaufförderers ist eine Abgabestation vorgesehen. Die Anlage liefert gute Ergebnisse, jedoch ist der Aufbau relativ kompliziert und damit kostspielig.

### Darstellung der Erfindung

Aufgabe der Erfindung ist es, eine Anlage der eingangs genannten Art weiter zu verbessern.

Die Aufgabe wird erfindungsgemäss gelöst durch die kennzeichnenden Merkmale des Anspruches 1.

Dadurch, dass die Umlauforgane als Rotationskörper ausgebildet sind, an denen die Rollen einander zugewandt und längs eines Teilkreises angeordnet sind, wobei der Abstand ihres Umfanges am Teilkreis kleiner ist als der Durchmesser der aufzunehmenden Spiesse, ergibt sich ein wesentlich einfacherer Aufbau der Anlage. Es ist ein kompakterer Aufbau der Anlage möglich und spezielle Übergabevorrichtungen für den Spiess von einer Rolle auf eine andere sind nicht mehr erforderlich. Die Anlage ist somit einfacher, kostengünstiger und ermöglicht dennoch einwandfreies Grillgut. Es hat sich sogar herausgestellt, dass mit dieser Anlage ein grösserer Durchsatz und damit ein wirtschaftlicherer Betrieb möglich sind.

Vorteilhafte Ausgestaltungen der Erfindung sind in den Ansprüchen 2 bis 10 beschrieben.

Grundsätzlich können die mit Grillgut bestückten Spiesse im oberen Bereich des Rotationskörpers aufgegeben werden. Vorteilhafter ist jedoch eine Ausgestaltung nach Anspruch 2, die es ermöglicht, das Grillgut bereits im seitlichen Bereich des Umlauforganes aufzugeben, der bequemer zugänglich ist. Hierzu sind den Rollen in Umlaufrichtung des Umlauforganes gesehen im vorderen äusseren Bereich jeweils ein Haltebolzen zugeordnet, dessen Abstand zum Umfang der zugeordneten Rolle kleiner ist als der Durchmesser des aufzunehmenden Spiesses.

Grundsätzlich können die Rollen so ausgebildet sein, dass sie mit einem Antrieb versehen sind. Vorteilhafter und einfacher ist jedoch eine Ausbildung nach Anspruch 3, wonach die Rollen frei drehbar sind und den Rollen im Heizwandbereich mindestens ein von aussen radial gegen die zwischen den Rollen angeordneten Spiesse zustellbares Führungsglied zugeordnet ist, das unter der Vorspannung einer Feder an den Spiessen derart anliegt, dass diese während des Durchgangs an der Heizwand in Drehung versetzt werden. Ein solches Führungsglied kann über die ganze Länge der Heizwand reichen. Vorteilhafter ist jedoch eine Ausbildung nach Anspruch 4, die mehrere über die Länge der Heizwand verteilte Führungsglieder vorsieht, die jeweils eine Teilstrecke bedienen und vorzugsweise einander überschneiden. Dadurch wird eine sicherere Mitnahme der Spiesse sichergestellt. Der Antrieb der Spiesse durch die Führungsglieder erfolgt durch Reibeingriff, wozu eine Ausbildung nach Anspruch 5 von Vorteil ist. Hierzu können die Führungsglieder aufgeraute oder gar verzahnte Angriffsflächen aufweisen. Zur Erleichterung des Eingriffes sind die Führungsglieder gemäss Anspruch 6 mit einem Auflaufbereich versehen. Die plattenartige Ausgestaltung der Führungsglieder nach Anspruch 7 ermöglicht eine besonders platzsparende Ausgestaltung der Anlage.

Gemäss Anspruch 8 ist die Aufgabestation seitlich der Rotationskörper angeordnet und gemäss Anspruch 9 ist im unteren Bereich eine Abgabestation vorgesehen. Letztere ist zweckmässigerweise so ausgestaltet, dass sie eine Auffangschale mit Seitenwänden aufweist, auf denen die Spiesse mit ihren Endabschnitten abrollend aufliegen, so dass die ankommenden Spiesse jeweils an die Vorderseite der Auffangschale rollen können und der hintere Bereich für die Aufnahme neuer Spiesse frei bleibt.

### Kurze Beschreibung der Zeichnungen

Ausführungsbeispiele der Erfindung werden nachfolgend anhand der Zeichnungen näher beschrieben, dabei zeigen:
- Figur 1: eine Anlage im Schnitt I-I der Figur 3 mit Darstellung der Heizwand;
- Figur 2: die Anlage der Figur 1 im Schnitt I-I der Figur 3 mit Darstellung von Führungsgliedern;
- Figur 3: die Anlage der Figur 1 im Schnitt III-III;
- Figur 4: die Anordnung von zwei Führungsgliedern im Ausschnitt und in grösserem Massstab;
- Figur 5: die Anordnung der Figur 4 im Schnitt V-V.

### Wege zur Ausführung der Erfindung

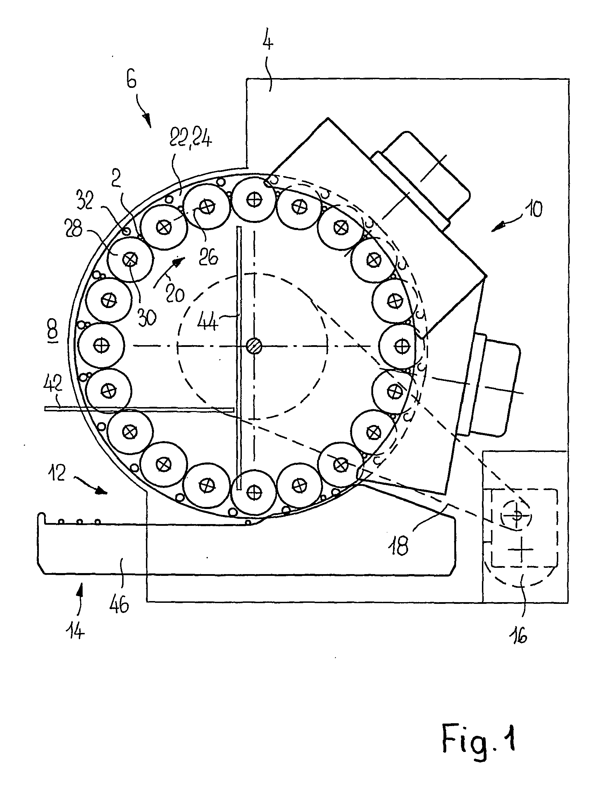

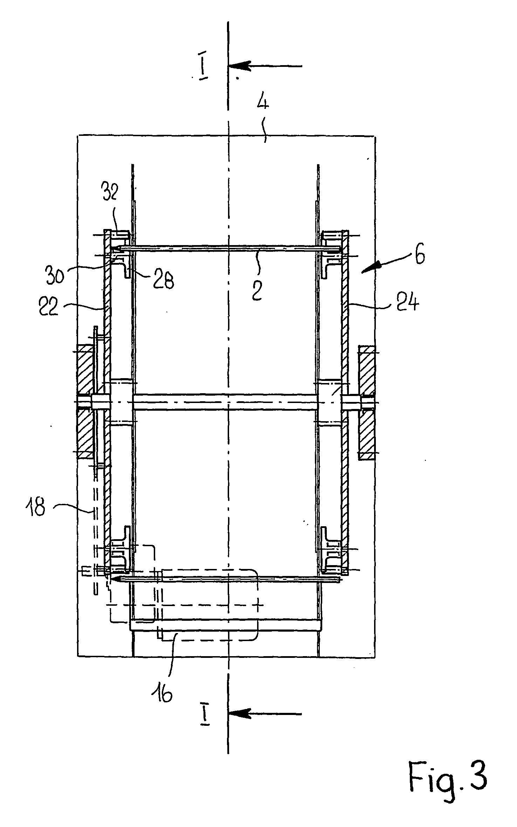

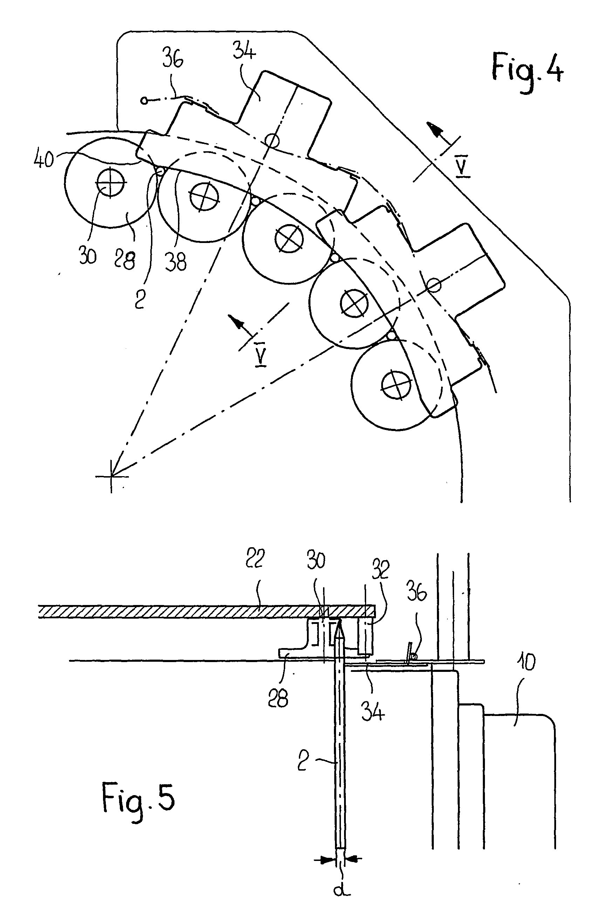

Die in den Figuren 1 bis 5 gezeigte Anlage zum Grillen von mit Grillgut bestückten Spiessen 2 weist eine Gehäuse 4 auf, in dem ein rotierender Umlaufförderer 6 von einer seitlichen Aufgabestation 8 über den Bereich einer Heizwand 10 zu einer Abgabestation 12, in der mit Grillgut bestückte Spiesse 2 an eine Auffangschale 14 abgegeben werden, bewegbar ist.

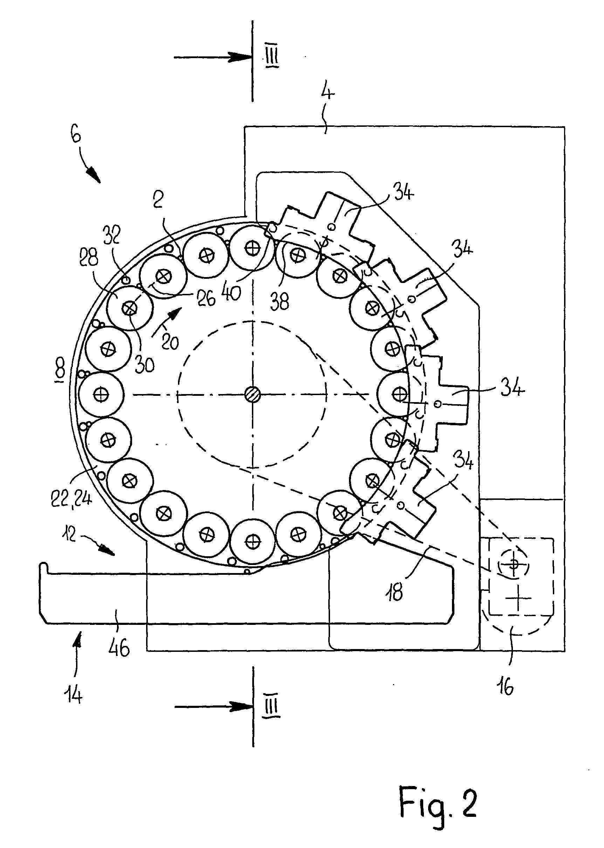

Der Umlaufförderer 6 wird von einem Motor 16 mittels eines Kettengetriebes 18 in Umlaufrichtung 20 angetrieben. Der Umlaufförderer weist zwei Rotationskörper 22, 24 auf, die in einem der Länge eines Spiesses angepassten Abstand voneinander angeordnet sind und längs eines Teilkreises 26 mit gegeneinander weisenden Rollen 28 bestückt sind. Die Rollen 28 können angetrieben sein oder wie im vorliegenden Beispiel an Achsen 30 frei drehbar gelagert sein. Die Rollen 28 sind so angeordnet, dass der Abstand ihres Umfanges am Teilkreis kleiner ist als der Durchmesser d der aufzunehmenden Spiesse. Den Rollen sind in Umlaufrichtung 20 des Umlaufförderers 6 gesehen im vorderen äusseren Bereich jeweils ein Haltebolzen 32 zugeordnet, dessen Abstand zum Umfang der zugeordneten Rolle 28 kleiner ist als der Durchmesser d des aufzunehmenden Spiesses. Dadurch ist es möglich, die Aufgabestation 8 seitlich des Umlaufförderers 6 anzuordnen, ohne dass die Gefahr besteht, dass aufgenommene Spiesse herausfallen, wie dies aus den Figuren 1 und 2 hervorgeht.

Den Rollen sind im Bereich der Heizwand 10 Führungsglieder 34 zugeordnet, die vorzugsweise plattenförmig ausgestaltet sind und von aussen radial gegen die zwischen den Rollen 28 angeordneten Spiesse 2 anstehen. Eine Feder 26 sorgt dafür, dass die Führungsglieder unter Vorspannung an den Spiessen 2 derart anliegen, dass sie während des Durchganges an der Heizwand 10 in Drehung versetzt werden. Die Anlage weist mehrere über die Länge der Heizwand 10 verteilte Führungsglieder auf, die jeweils eine Teilstrecke bedienen und vorzugsweise einander überschneiden, wie insbesondere aus Figur 2 hervorgeht. Die Führungsglieder 34 sind mit einer Angriffsfläche 38 ausgestattet, die aufgeraut oder verzahnt sein kann, um die Mitnahme der Spiesse 2 zu verbessern. Auflaufbereiche 40 an den Führungsgliedern 34 erleichtern das Zusammenspiel zwischen den Führungsgliedern 34 und den Spiessen 2.

Wie aus Figur 1 hervorgeht, ist die Aufgabestation 8 seitlich am Umlaufförderer 6 angeordnet und vorzugsweise mit einem Glastablar 42 ausgerüstet. Eine vertikale Glasscheibe 44 schirmt die Aufgabestation 8 gegen die Heizwand 10 ab und gestattet die Beobachtung der mit Grillgut bestückten Spiesse 2. Die vom oberen Bereich über die Rückseite bis gegen den unteren Bereich reichende Heizwand 10 reicht aus, um das Grillgut ausreichend zu behandeln. Durch Einstellen der Antriebsgeschwindigkeit des Motors 16 und der Heizleistung der Heizwand 10 kann der Durchgang und die Temperatur der Anlage an jedes Grillgut angepasst werden. An der Abgabestation 12 werden die Spiesse 2 selbsttätig an die Auffangschale 14 abgegeben. Letztere weist Seitenwände 46 auf, die einen solchen Abstand voreinander haben, dass die Spiesse mit ihren Endbereichen auf den Seitenwänden aufliegend abrollen können. Damit ist sichergestellt, dass die Spiesse 2 stets bis ans vordere Ende der Auffangschale 14 rollen, wo sie abgenommen werden können. Damit ist auch eine reibungslose Abgabe der Spiesse 2 vom Umlaufförderer 6 an die Auffangschale 14 sichergestellt.

### Bezugszeichenliste

- d: Durchmesser der Spiesse
- 2: Spiess
- 4: Gehäuse
- 6: Umlaufförderer
- 8: Aufgabestation
- 10: Heizwand
- 12: Abgabestation
- 14: Auffangschale
- 16: Motor
- 18: Kettengetriebe
- 20: Umlaufrichtung
- 22: Rotationskörper
- 24: Rotationskörper
- 26: Teilkreis
- 28: Rolle
- 30: Achse
- 32: Haltebolzen
- 34: Führungsglied
- 36: Feder
- 38: Angriffsfläche
- 40: Auflaufsbereich
- 42: Glastablar
- 44: Glasscheibe
- 46: Seitenwand

## Patentansprüche

1. Anlage zum Grillen von mit Grillgut bestückten Spiessen (2), mit einem mittels eines Motors (16) angetriebenen Umlaufförderer (6), der zwei mit Abstand voneinander angeordnete, synchron umlaufende Umlauforgane (22,24) enthält, die jeweils mit über die Länge verteilten Rollen (28) zur Aufnahme der Spiesse versehen sind, ferner mit einer Aufgabestation (8) und einer Abgabestation (12) für die Spiesse (2) und mit einer zwischen diesen angeordneten Heizwand (10), **dadurch gekennzeichnet, dass** die Umlauforgane als Rotationskörper (22,24) ausgebildet sind, an denen die Rollen (28) einander zugewandt längs eines Teilkreises (26) so angeordnet sind, dass der Abstand ihres Umfanges am Teilkreis (26) kleiner ist als der Durchmesser (d) der aufzunehmenden Spiesse (2).

2. Anlage nach Anspruch 1, **dadurch gekennzeichnet, dass** die Rollen (28) frei drehend angeordnet sind, wobei diesen Rollen (28) an den Rotationskörpern (22,24) in Umlaufrichtung (20) gesehen im vorderen äusseren Bereich jeweils ein Haltebolzen (32) zugeordnet ist, dessen Abstand zum Umfang der zugeordneten Rolle (28) kleiner ist als der Durchmesser (d) des aufzunehmenden Spiesses (2).

3. Anlage nach Anspruch 1 oder 2, **dadurch gekennzeichnet, dass** den Rollen (28) im Bereich der Heizwand (10) mindestens ein von aussen radial gegen die zwischen den Rollen (28) angeordneten Spiessen (2) zustellbares Führungsglied (34) zugeordnet ist, das unter der Vorspannung einer Feder (36) an den Spiessen (2) anliegt, um diese während des Durchganges an der Heizwand (10) in Drehung zu versetzen.

4. Anlage nach Anspruch 3, **dadurch gekennzeichnet, dass** sie mehrere über die Länge der Heizwand (10) verteilte Führungsglieder (34) aufweist, die jeweils eine Teilstrecke bedienen und vorzugsweise einander überschneiden.

5. Anlage nach Anspruch 3 oder 4, **dadurch gekennzeichnet, dass** die Führungsglieder (34) aufgeraute oder verzahnte Angriffsflächen (38) aufweisen.

6. Anlage nach einem der Ansprüche 3 bis 5, **dadurch gekennzeichnet, dass** die Führungsglieder (34) einen Auflaufbereich (40) aufweisen.

7. Anlage nach einem der Ansprüche 3 bis 6, **dadurch gekennzeichnet, dass** die Führungsglieder (34) plattenartig ausgebildet sind.

8. Anlage nach einem der Ansprüche 1 bis 7, **dadurch gekennzeichnet, dass** die Aufgabestation (8) im seitlichen Bereich der Rotationskörper (22,24) angeordnet ist.

9. Anlage nach einem der Ansprüche 1 bis 8, **dadurch gekennzeichnet, dass** die Abgabestation (12) im unteren Bereich der Rotationskörper (22,24) angeordnet ist.

10. Anlage nach Anspruch 9, **dadurch gekennzeichnet, dass** die Abgabestation (12) eine Auffangschale (14) mit Seitenwänden (46) aufweist, auf denen die Spiesse (2) mit ihren Endabschnitten abrollend aufliegen.

## Claims

1. Installation for grilling spits (2) charged with products to be grilled, with a rotating conveyor (6) driven by means of a motor (16) and comprising two rotating components (22, 24) that synchronously rotate at a distance from each other and are respectively provided with rolls (28) which are distributed along the length thereof and are used to receive the spits, further comprising a feeding station (8) and a delivery station (12) for the spits (2) and a heating wall (10) arranged therebetween, **characterized in that** the rotating components are configured as rotating bodies (22, 24) on which the rolls (28) are arranged facing each other along a pitch circle (26) in such a way that the distance between the circumference thereof at the pitch circle (26) is smaller than the diameter (d) of the spits (2) to be received.

2. Installation according to claim 1, **characterized in that** the rolls (28) are arranged freely rotating, each one of these rolls (28) having an associated retaining pin (32) on the rotating components (22, 24) arranged in a forward exterior section as seen in the revolving direction (20), the distance from the retaining pin (32) to the circumference of the associated roll (28) being smaller than the diameter (d) of the spit (2) to be received.

3. Installation according to claim 1 or 2, **characterized in that** in the region of the heating wall (10) there is associated to the rolls (28) at least one guiding member (34) that can be supplied radially from outside towards the spits (2) arranged between the rolls (28) and that abuts against the spits (2) under the initial load of a spring (36) so as to induce rotation of the spits (2) upon their passage along the heating wall (10).

4. Installation according to claim 3, **characterized in** comprising a plurality of guiding members (34) that are distributed along the length of the heating wall (10) for operating a respective section thereof and that preferably overlap each other.

5. Installation according to claim 3 or 4, **characterized in that** the guiding members (34) comprise roughened or indented contact surfaces (38).

6. Installation according to one of claims 3 to 5, **characterized in that** the guiding members (34) comprise an entry portion (40).

7. Installation according to one of claims 3 to 6, **characterized in that** the guiding members (34) are configured plate-like.

8. Installation according to one of claims 1 to 7, **characterized in that** the feeding station (8) is arranged in a lateral portion of the rotating bodies (22, 24).

9. Installation according to one of claims 1 to 8, **characterized in that** the delivery station (12) is arranged in a lower portion of the rotating bodies (22, 24).

10. Installation according to claim 9, **characterized in that** the delivery station (12) comprises a collecting pan (14) with side walls (46) on which the spits (2) are rollingly supported on their end portions.

## Revendications

1. Installation pour faire griller des broches garnies de pièces à griller (2), comprenant
- un convoyeur circulaire (6) entraîné au moyen d'un moteur (16), et contenant deux éléments circulaires (22, 24) écartés distance l'un de l'autre et tournant de manière synchrone, pourvus respectivement de galets (28) répartis sur leur périphérie pour la réception des broches, et en outre
- une station d'entrée (8) et
- une station de sortie (12) pour les broches (2), ainsi qu'une paroi chauffante (10) entre celles-ci,
**caractérisée en ce que**
les éléments circulaires sont des corps de rotation (22, 24) portant les galets (28) tournés les uns vers les autres et répartis le long d'un cercle primitif (26), de sorte que l'intervalle entre leurs périphéries au niveau du cercle partiel (26) est inférieur au diamètre (d) des broches (2) à recevoir.

2. Installation selon la revendication 1,
**caractérisée en ce que**
les galets (28) peuvent tourner librement, et au niveau des corps de rotation (22, 24), dans la zone extérieure avant, vu dans la direction de circulation (20), on associe respectivement à ces galets (28), un boulon d'arrêt (32) dont la distance par rapport à la périphérie du rouleau associé (28) est inférieure au diamètre (d) de la broche à recevoir (2).

3. Installation selon la revendication 1 ou 2,
**caractérisée en ce qu'**
dans la zone de la paroi chauffante (10), on associe aux galets (28), au moins un élément de guidage (34) pouvant être bloqué radialement de l'extérieur contre les broches (2) disposées entre les galets (28), et qui, sous la précontrainte d'un ressort (36), repose contre les broches (2) afin d'entraîner celles-ci en rotation pendant leur passage au niveau de la paroi chauffante (10).

4. Installation selon la revendication 3,
**caractérisée en ce que**
plusieurs éléments de guidage (34) répartis sur la longueur de la paroi chauffante (10), desservent respectivement une trajectoire partielle on se chevauchant de préférence.

5. Installation selon la revendication 3 ou 4,
**caractérisée en ce que**
les éléments de guidage (34) présentent des surfaces d'attaque rugueuses ou dentées (38).

6. Installation selon l'une des revendications 3 à 5,
**caractérisée en ce que**
les éléments de guidage (34) présentent une zone d'entrée (40).

7. Installation selon l'une des revendications 3 à 6,
**caractérisée en ce que**
les éléments de guidage (34) sont des plaques.

8. Installation selon l'une des revendications 1 à 7,
**caractérisée en ce que**
la station d'entrée (8) est disposée dans la zone latérale des corps de rotation (22, 24).

9. Installation selon l'une des revendications 1 à 8,
**caractérisée en ce que**
la station de sortie (12) est disposée dans la zone inférieure des corps de rotation (22, 24).

10. Installation selon la revendication 3,
**caractérisée en ce que**
la station de sortie (12) présente une coque de réception (14) dotée de parois latérales (46) sur lesquelles les extrémités des broches (2) viennent se déposer en roulant.
